# EUROPEAN PATENT SPECIFICATION

(11) **EP 1 990 176 B1**
(45) Date of publication and mention of the grant of the patent: **14.10.2009**
(21) Application number: 07009531.0
(22) Date of filing: 11.05.2007
(51) Int. Cl.: B29C 47/08

(54) **Expandable melt feed line**
Verlängerbare Schmelzzuführungsleitung
Canal d'injection extensible

(43) Date of publication of application: 12.11.2008
(73) Proprietor: DMT Technology GmbH, 5026 Salzburg (AT)
(72) Inventor: Battentier, Hervè Guy, 38330 Saint Nazaire les Eymes (FR); Cunat, Louis Michel, 69007 Lyon (FR); Del Gatto, Eric, 73290 La Motte Servolex (FR)
(74) Representative: Koepe, Gerd L.

(56) References cited:
- EP-A- 0 638 407
- EP-A- 0 849 065
- WO-A-99/37461
- DE-A1- 3 242 286
- FR-A- 1 277 268
- FR-A- 2 877 870
- US-A1- 2006 105 072

## Description

The present invention relates to an expandable melt feed line supplying molten fluid from a mixing device to an orifice. In a particular embodiment, the present invention relates to an expandable melt feed line capable of supplying a melt exemplified by a molten polymer material from a mixing device as, for example, an extruder, to an orifice as, for example, a die delivering the melt to a roller or a combination of rollers where the melt is further treated, frequently with cooling it to a temperature where further mechanical process steps can be applied to the polymer material.

The first step of an overall process of fabricating cast films comprising polymer materials or monoaxially or biaxially oriented films comprising polymer materials is an extrusion, through a die, of a film of a molten polymer onto a roller ("chill roller") the surface of which is kept at a temperature below the glass transition temperature of the respective polymer. The roller surface quenches the polymer into an amorphous state.

In one embodiment, a subsequent step comprises calandering of the polymer material, before it is processed in further steps to obtain a final polymer film product. In another embodiment, a subsequent step of the overall process comprises steps of stretching the film previously generated by well-known methods in the longitudinal (machine) direction and/or in the transverse direction, the latter being a stretching step in a direction perpendicular to the machine direction, commonly. These stretching steps may be performed alone or may be performed one after the other or may be performed simultaneously on well-known stretching plants. In the latter case, a stretching action in the longitudinal (machine) direction and transverse direction needs the simultaneous application of stretching forces to the film material in two directions (usually perpendicular to each other), while the film is moving with high speed along a moving path of the film on a stretching device. Once the drawing step(s) is/are completed, the drawn polymer film is "heat set" or crystallized under tension and with a temperature gradient starting at elevated temperatures and continuing to decreased temperatures. The heat setting step prevents the film from shrinking back to its unstretched shape and locks the molecular orientation in the polymer film plane. The orientation of the polymer molecule chains thus obtained is responsible for the high strength and stiffness of the oriented film.

The polymer material to be subjected to calandering or to be stretched on such a stretching plant is supplied, in the above first step, in the form of raw solid polymer particles which are fed into a mixing device, said mixing device being exemplified by an extruder. In the mixing device or extruder, the polymer particles which may be particles of a single polymer (homopolymer, copolymer) or (a blend of) particles of several polymers (homopolymers, copolymers) are intimately mixed to become a homogeneous mixture and/or are intimately mixed with each other and with one or more liquid or solid additive(s) so as to form a homogenous mixture, and simultaneously are molten by applying mechanical (shearing) energy and/or heat energy so as to result into a molten polymer mass having a predetermined viscosity for the subsequent step of passing the orifice or, specifically, the die.

Usually, with the aim of allowing the plant to work efficiently, four to six extruders are appropriately arranged and connected to continuously supply molten polymer material to one die.

In view of the fact that the whole process of feeding the polymer material, transforming it into a polymer film web and stretching the polymer film web has to be carried out with high speed in order to be economical and, nevertheless, under controlled conditions (including an exact arrangement of all devices of the plant in a predetermined relationship to each other), there occurred a major problem in the prior art: The extruders (including the tubes supplying the molten polymer material to the die) are usually made of a metal or metals or metal alloy as, for example stainless steels, high temperature construction steels, heat-treatable steels, hot-work tool steels and heat resistant steels; a person with ordinary skill in this field can select such materials according to the circumstances from materials, metals and metal alloys known for such a purpose. In the course of treating the polymer material in the extruder, the heat applied to and being created in the polymer material is received by the appliances to which the polymer material is contacted. As a result, the metal of the extruder and the tubes of the lines supplying the molten polymer material are expanded. In the course of such an expansion, the dimensions of (and, as a result, the mutual distances between) different parts of the plant (e.g. between the extruder and the melt feed line or between the melt feed line and the die) change with changes of the temperature. Since the mutual arrangement of the die emitting the polymer film web onto the cooling rollers had to be fixed, allowing only extremely narrow changes of the distance between the die and the roller(s) (or the nip between two rollers), the extruders and the melt feed lines (tubes) had to be arranged in such a way that the expansion (at increasing temperature of the melt) and contraction (at decreasing temperature of the melt) of the extruders and melt feed lines could be compensated. The solution in the prior art was to bear the extruder and/or the melt feed line on moving means (as, for example, rollers). As a result, the expansion or contraction of the devices with changes in temperature could occur by movement of the devices away from or towards to each other without deteriorating the function and performance of the overall plant.

However, such a solution required a complicated mechanical structure of the bearings bearing the extruders and melt feed lines and other parts of the plant, hence increasing the costs for setting up such a plant and creating a place for interruptions of its operation in case of problems occurring with the bearings of such devices expanding and contracting with changes in the operation temperature.

A device of this type is disclosed in EP-A-0849065.

Hence, it was one object of the present invention to provide a melt feed line connecting a mixing device and an orifice which may cope with temperature changes of the material supplied in the line without the need to change the relative distance between the mixing device and the orifice.

Another object of the invention was to provide a molten polymer supply line to a usual polymer film web stretching plant wherein the position and length of the molten polymer supply line is independent of the temperature of the polymer material supplied by said line.

Another object of the invention was to provide a process for supplying polymer material from a mixing device to an orifice wherein the position and length of the molten polymer supply line is made independent of the temperature of the polymer material supplied by said line.

It was another object of the invention to provide a plant for manufacturing a processed polymer material from a raw polymer material, wherein the melt feed lines can compensate expansions and contractions of the devices of the plant which are undergone during temperature changes of the devices in the course of the operation of the plant.

It was now surprisingly found by the inventors to the present invention that the above and further objects and advantages of the invention can be achieved by providing a melt feed line portion having a telescope function and allowing an expansion or contraction in the direction of the melt feed line axis which is suitable to compensate the thermal expansion and contraction of the mixing device and melt supply line.

Hence, the invention relates to a melt feed line capable of connecting, and supplying molten fluid between, two fixed position devices, said melt feed line comprising
- a first portion having an outer peripheral wall having a diameter (D') and an inner peripheral wall surrounding a free volume of the melt feed line having a diameter (D"), with (D') > (D"), said first portion extending from an inlet along the melt feed line axis (A) to an outlet, said inlet being connected to an upstream portion (U) of the melt feed line or a device (E) located upstream of the first portion; and
- at least one second portion having an inner peripheral wall having a diameter (D') corresponding to the diameter (D') of the outer peripheral wall of the first portion and an outer peripheral wall having a diameter (D), with (D) > (D'), said at least one second portion extending from an inlet along the melt feed line axis (A) to an outlet, said outlet being connected to a downstream portion (W) of the melt feed line or a device (F) located downstream of the second portion;
- the outlet of the first portion being capable, with its outer peripheral wall, of gliding, in parallel to the melt feed line axis (A), along the inner peripheral wall of the second portion adjoining its inlet, by a distance determined by the thermal expansion or contraction of said two fixed position devices in the course of their increase or decrease of dimensions due to a contact with the molten fluid.

Preferred embodiments of the melt feed line according to the invention are claimed in subclaims 2 to 7.

The invention also relates to a process for supplying a polymer material from one fixed position device to another fixed position device, said process comprising the steps of
(i) supplying a raw polymer material to a first fixed position device where the raw polymer material is treated in a predetermined manner and heated to a predetermined temperature by usual heating means so as to obtain a molten treated polymer material;
(ii) releasing the treated polymer material at the outlet of the first fixed position device into a melt feed line;
(iii) allowing the treated polymer material to pass said melt feed line; and
(iv) guiding the polymer material from the melt feed line to a second fixed position device for further treatment; wherein
(v) said polymer material, at the outlet of the first fixed position device, is entered into a first portion of said melt feed line, said first portion having an outer peripheral wall having a diameter (D') and an inner peripheral wall surrounding a free volume of the melt feed line having a diameter (D"), with (D') > (D"), said first portion extending from an inlet along the melt feed line axis (A) to an outlet, said inlet being connected to an upstream portion (U) of the melt feed line or to the first fixed position device located upstream of the first portion, from where
(vi) said polymer material, after passing the outlet of the first portion of the melt feed line, is entered into at least one second portion of the melt feed line, said second portion having an inner peripheral wall having a diameter (D') corresponding to the diameter (D') of the outer peripheral wall of the first portion and an outer peripheral wall having a diameter (D), with (D) > (D'), said at least one second portion extending from an inlet along the melt feed line axis (A) to an outlet, said outlet being connected to a downstream portion (W) of the melt feed line or the second fixed position device located downstream of the second portion; while
(vii) allowing the outlet of the first portion to glide, with its outer peripheral wall, in parallel to the melt feed line axis (A) along the inner peripheral wall of the second portion adjoining its inlet, by a distance determined by the thermal expansion or contraction of said two fixed position devices in the course of their increase or decrease of dimensions due to a contact with the molten fluid.

Preferred embodiments of the process according to the invention are claimed in subclaims 9 to 11.

The invention also relates to a plant for manufacturing a processed polymer material from a raw polymer material comprising
(a) a feed inlet for the raw polymer material allowing the raw polymer material to be supplied;
(b) optionally the same or a different feed inlet allowing the supply of at least one further additive and/or charge;
(c) a device for mixing the raw polymer material, optionally together with one or more additives and/or one or more charge(s) while heating it to become a homogeneous molten polymer material;
(d) one or more device(s) for further processing the resulting molten polymer material;
(e) said devices (c) to (d) being connected by a t least one melt feed line;
(f) said melt feed line being a melt feed line according to the detailed description below.

Preferred embodiments of the processed polymer manufacturing plant are claimed in subclaims 13 to 16.

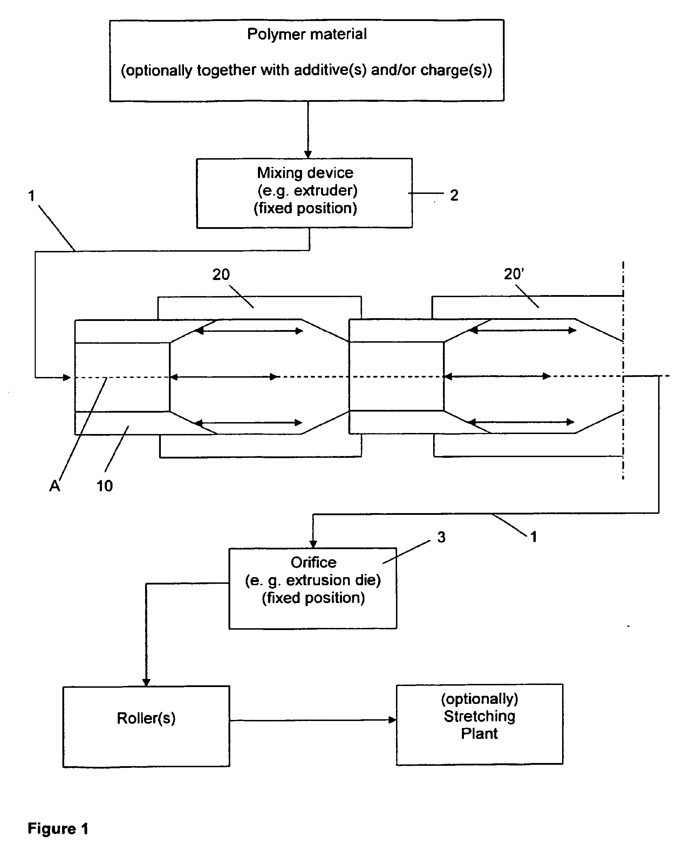

The invention is now in detail described by referring to the Figures, wherein
Figure 1 shows a scheme of the process including the melt feed line according to the present invention;
Figure 2 shows a detailed sectional view of the melt feed line and particularly of its first and second portions thereof, as described below; and
Figure 3 shows another detailed sectional view of the melt feed line and its first and second portions, wherein further devices of preferred embodiments are shown.

The invention is now described in detail by referring to the Figures. When referring to the preferred embodiments shown in the Figures, however, as they are shown and hereafter explained, this should not be construed as limiting the invention to these preferred embodiments which are given only as examples in order to allow a better understanding of the invention.

In the field of supplying a molten fluid between two devices for treating such a molten fluid via a melt feed line 1, the problems of the prior art related to the thermal expansion and contraction of the devices and the melt feed line 1 with changing temperatures of the molten fluid could be overcome by the proposal of the invention. The melt feed line 1 of the invention is capable of connecting two devices 2, 3 of the plant which are intended to treat a molten fluid by suitable process steps. The melt feed line 1 is also capable of supplying the molten fluid from one of the devices to the other one.

Exemplary (but not restricting) examples of the devices 2, 3 the position of which has not to be changed with respect to a main part of the plant, even if the temperature thereof is changing much, are a mixing device for mixing one or more than one material(s), optionally with simultaneously performing additional process steps as, for example, shearing the material(s), which shearing process may include an increase of the temperature, and/or applying heat to the material(s) by separate heating means as, for example, a heater or several heaters. In a more preferred embodiment of the invention, the mixing means may be an extruder, for example a single-screw extruder or a twin-screw extruder having co-rotating or counter-rotating screws.

Together with the mixing device and, preferably, the extruder or independent of it, the other one of the two devices 2, 3 the position of which does not change with changes (increase or decrease) of the temperature may be an orifice, in accordance with the invention, through which the molten fluid is passed. Even more preferred in accordance with the invention is a die allowing to extrude the molten fluid in a predetermined manner.

In a preferred (but not restricting) embodiment of the invention, the molten fluid is a polymer material melt and, even more preferably, is a polymer material melt for stretching a polymer film web. The invention is hereinafter explained in detail by means of addressing a polymer material melt as a preferred example of a molten fluid, but is not restricted to said polymer material melt.

Preferred examples of the polymer material are selected from polypropylene (PP), polyethylene (PE), polyvinyl chloride (PVC), polystyrene (PS), polyamide (PA), polycarbonate (PC), polylactic acid (PLA), polyethylene naphthalate (PEN) and polyethylene terephthalate (PETP) and their copolymers and blends, but the invention is, of course, not restricted to the above mentioned materials. Particularly preferred polymer materials to be processed in accordance with the present invention are polypropylene (PP), polyethylene (PE), polyvinyl chloride (PVC), polystyrene (PS), polyamide (PA) and polyethylene terephthalate (PETP). There may be used one polymer material (which may be a homopolymer or a copolymer), or there may be used blends of two or several polymer materials (which may also be homopolymers or copolymers or both).

The polymer material(s) may further contain usual additives known to and selectable by a person skilled in the present field in accordance with the requirements, e. g. in accordance with the intended use of the final product. Preferred additives in accordance with the invention are plastifiers, dispersants, thermal and/or photochemical stabilizers, antioxidants, lubricants, antistatic agents, flame retardants, dyes, pigments, solvents, as well as charges which may be mineral additives (e. g. carbonates of calcium, magnesium, zinc; aluminium tri-hydroxide, magnesium oxide, titanium oxide, carbon black; dolomite, lime, clay, silico-aluminates as talc, caolin, mica, bentonite, wollastonite) or organic additives (e. g. carbohydrates, starch, natural or modified celluloses etc.). Additives and charges being completely soluble in the polymer melt (and in the final processed polymer) result into clear films with superior properties. On the other hand, additives and charges (e. g. calcium carbonate, titanium dioxide) being not completely soluble in the polymer melt (and in the final processed polymer) result into films of intransparent or even opaque appearance.

The melt feed line 1 according to the invention capable of connecting, and supplying molten fluid, e.g. a polymer material melt, between the two devices 2, 3 comprises a first portion 10 and at least one second portion 20, 20'. There may be present one second portion 20, or there may be present two or even more second portions 20, 20', 20" .... . The presence of one or two second portions 20, 20' is preferred, and the presence of one second portion 20 is preferred most. Without imparting a restriction to the invention, the following description refers to the preferred embodiment of a presence of one second portion 20 of the melt feed line 1 only.

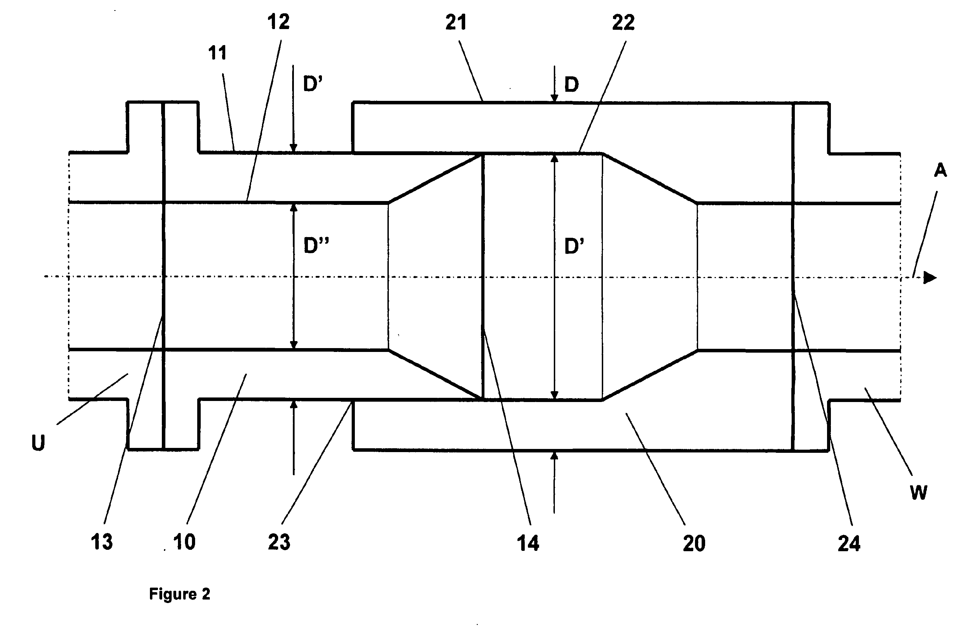

The two portions 10 and 20 are now explained in detail by referring to the Figures, in particular to Figure 2.

According to the invention, the first portion 10 of the melt feed line 1 has an outer peripheral wall 11 creating a diameter (i. e. a distance between the two outer sides of the wall 11) of D'. The inner peripheral wall 12 surrounds a free volume of the melt feed line 1 having a diameter of D". The diameters D' and D" satisfy the relationship D' > D". The diameters D' and D" are measured in a plane perpendicular to the axis A of the melt feed line 1, said axis A extending substantially in the middle of the melt feed line 1 (including its first and second portions 10, 20 in parallel to the flow of the molten fluid or polymer material melt, when fed from one of the devices 2, 3 to the other one. In particularly preferred embodiments of the invention, D' may satisfy the relationship 15 mm ≤ D' ≤ 350 mm, more preferably may satisfy the relationship 30 mm ≤ D' ≤ 220 mm, and/or D" may satisfy the relationship 10 mm ≤ D" ≤ 250 mm, more preferably may satisfy the relationship 20 mm ≤ D" ≤ 150 mm. The advantage of such dimensions is that the whole fluid flow between the devices 2, 3 can be effected even at high throughput of the overall plant without the risk of failures.

The free volume of the melt feed line 1 surrounded by the inner peripheral wall 12 may have any cross-section, for example may have circular, square, rectangular or triangular cross-section, without restricting the invention. A circular cross-section, although not exclusively realized, is preferred. In other words: In a preferred embodiment of the invention, the melt feed line 1 preferably has a circular cross-section both inside and outside.

The first portion 10 of the melt feed line 1 extends from an inlet 13 along the melt feed line axis A to an outlet 14. The inlet 13 is either connected to an upstream portion U of the melt feed line 1, or the inlet 13 is connected to a device E located upstream of the first portion 10 of the melt feed line 1.

The wall of the first portion 10 of the melt feed line 1 consisting of the inner peripheral wall 12 and the outer peripheral wall 11 may have any shape and thickness which may be selected by a skilled person in accordance with the technical requirements. In preferred embodiments of the invention, the wall thickness may be in a range of from 0.5 mm to 50 mm, preferably in a range of from 2,5 mm to 30 mm. Basically the same dimensions can be mentioned also for the walls of the second portion 20.

The melt feed line 1 further comprises, in accordance with the invention, at least one second portion 20. The at least one second portion 20 has an inner peripheral wall 22 having a diameter (i. e. a distance between the two inner sides of the wall 22) D' corresponding to the diameter D' of the outer peripheral wall 11 of the first portion 10, and an outer peripheral wall 21 having a diameter D. The diameters D and D' satisfy the relationship D > D'. The diameters D and D' are measured in a plane perpendicular to the axis A of the melt feed line 1, said axis extending substantially in the middle of the melt feed line 1 (including its second portion 20) in parallel to the flow of the molten fluid or polymer material melt. In particularly preferred embodiments of the invention, D' may satisfy the relationship 15 mm ≤ D' ≤ 350 mm, more preferably may satisfy the relationship 30 mm ≤ D' ≤ 220 mm, and/or D may satisfy the relationship 20 mm ≤ D ≤ 500 mm, more preferably may satisfy the relationship 50 mm ≤ D ≤ 300 mm. The advantage of such dimensions is that the whole fluid flow between the devices can be effected even at high throughput of the overall plant without the risk of failures.

The at least one second portion 20 (or several second portions 20, 20', 20", ..., which are arranged in sequence along the axis A of the melt feed line 1) extends/extend from an inlet 23 along the melt feed line axis A to an outlet 24. The outlet 24 is connected to a downstream portion W of the melt feed line 1. Alternatively, the outlet 24 may be connected to a device F located downstream of the second portion 20 of the melt feed line 1.

In a further preferred embodiment of the invention, the inner peripheral wall 12 of the first portion 10 of the melt feed line 1 diverges towards the outer peripheral wall 11 in the direction from the inlet side 13 of the first portion 10 towards the outlet side 14 thereof. The inner diameter D" of the first portion 10 is continuously increased by the divergence of the inner peripheral wall 12 towards the outer peripheral wall 11 so as to approximate to the inner diameter D' of the inner peripheral wall 22 of the at least one second portion 20.

In accordance with the invention, the outlet 14 of the first portion 10 is capable of gliding, with its outer peripheral wall 11, in parallel to the melt feed line axis a along the inner peripheral wall 22 of the second portion 20 adjoining its inlet 23. Such a gliding motion may be a motion of the end of the outlet 14 downstream (i. e. towards the second fixed position device 3) in cases of increasing temperature, i. e. when the device parts expand due to their thermal expansion coefficient at increasing temperature, or alternatively may be a motion of the end of the outlet 14 upstream (i. e. towards the first fixed position device 2) in cases of decreasing temperature, i.e. when the device parts contract due to their thermal coefficient at decreasing temperature.

The distance of the movement is determined by the thermal expansion or contraction of said two fixed position devices 2, 3 in the course of their increase or decrease of dimensions die to their contact with the molten fluid or polymer material. Hence, the distance may be, in preferred embodiments of the invention, a small distance in cases of slight temperature changes and may be a larger distance, if the temperature change is large. In particularly preferred cases, the overall distance of movement may be in the range of from 5 mm to 200 mm, more preferably in the range of from 10 mm to 50 mm, and a skilled person may select the proper distance of gliding movement on the basis of ordinary skill.

The melt line 1 including, in accordance with the present invention, the first portion 10 and a least one second portion 20 may be made of the same materials as the devices (including the melt feed line 1) of the prior art, i. e. may consist of a metal or of metals or of metal alloys. Exemplary, but not restricting examples are stainless steels, high temperature construction steels, heat-treatable steels, hot-work tool steels and heat resistant steels; a person with ordinary skill in this field can select such materials according to the circumstances from materials, metals and metal alloys known for such a purpose. Also those parts of the first portion 10 and of the at least one second portion 20 gliding relative to each other in the case of increasing temperature (expansion of the devices; contraction of the melt feed line 1 including the first and at least one second portions 10, 20) or decreasing temperature (contraction of the devices; expansion of the melt feed line 1 including the first and at least one second portions 10, 20) are made of metal and are manufactured with such an exactness of the dimensions that they easily glide along each other portion's wall and that no molten fluid and, particularly, no molten polymer material is passing the gap between the two walls of the first and at least one second portions 10, 20, respectively. Hence, in the practice of using the melt feed line 1 according to the invention, no seals between the metal parts of the melt feed line 1 including the first and at least one second portions 10, 20, are needed. This is advantageous since no wear-affected parts needed to be exchanged after a certain operation time are used between the moving or gliding parts of the first and second portions 10, 12. However, in an embodiment also being covered by the present invention, those gliding parts of the first and second portions 10, 20 may be sealed by usual seals suitable between metallic parts. Not considering the requirement that these seals must be heat-resistant against the temperatures, and capable of withstanding the pressures, of operation of the melt feed line 1 of the invention, there are no further restrictions imposed on the selection of such seals, and a person having ordinary skill in this field may select such seals in accordance with the requirements.

In a further preferred embodiment of the invention, the walls of the first and at least one second portions 10, 20, preferably the walls of all of the first and second portions comprise heating means 15 (in the first portion 10) and 25 (in the second portion(s) 20, 20' .... In an advantageous manner, heating the walls of the first and/or second portions 10, 20, 20', ... may contribute to heating the molten fluid, particularly the molten polymer material, at a temperature at which the further processing in subsequent devices of the overall plant (e. g. in the orifice or die) may be carried out appropriately. This may be of particular advantage in cases where the first and at least one second portions 10, 20 are at a relatively early (upstream) stage of the flow from the mixing/heating device or extruder 2 to the final processing stage and/or the melt feed line 1 including the first and at least one second portions 10, 20 are followed (downstream) by several devices not allowing a heating of the molten fluid or polymer material.

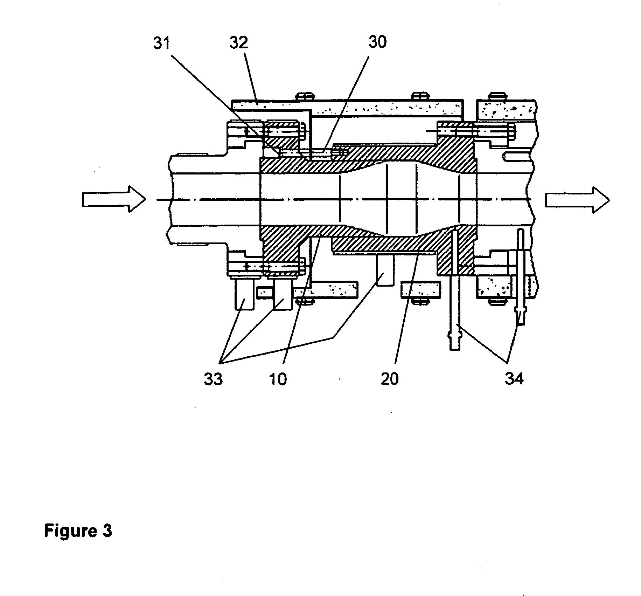

As may be derived particularly from Figure 3, the melt feed line 1 comprising the first and at least one second portions 10, 20 may comprise, in a preferred embodiment, at least one guiding element 30 for the gliding motion relative between the first and at least one second portion 10, 20 extending in parallel to the axis A of the melt feed line 1. There may be one guiding element 30, or there may be several guiding elements 30 guiding the gliding motion; in a more preferred embodiment of the invention, there are two or three guiding elements 30, 30', 30", ..., which advantageously are located around the circumference of the first and/or second portion(s) 10, 20 of the feed line 1, even more preferred are located in equal circular distances (for example on opposite sides (180 °) of the first and/or second portions 10, 20 in the case of two guiding elements 30, 30', or at angles of 120 °, relative to each other, in the case of three guiding elements 30, 30', 30"), although this is not compulsory and may be selected by a skilled person in accordance with the circumstances. The nature of the guiding element may be selected by a skilled person, too, in accordance with the purpose thereof, and no restriction is imposed on such a guiding element 30.

In another preferred embodiment, the melt feed line 1 including the first and at least one second portions 10, 20 also comprises at least one stopper 31 for the gliding motion of the first and at least one second portions 10, 20 extending in parallel to the axis A of the melt feed line 1. There may be one such stopper 31, or there may be several stoppers 31, 31', 31", .... According to a preferred embodiment of the invention, there will be at least two, even more preferred at least three stoppers 31, 31', 31", which advantageously are located around the circumference of the first and/or second portion(s) 10, 20 of the feed line 1, even more preferred are located in equal circular distances (for example on opposite sides (180 °) of the first and/or second portions 10, 20 in the case of two stoppers 31, 31', or at angles of 120 °, relative to each other, in the case of three stoppers 31, 31', 31"), although this is not compulsory and may be selected by a skilled person in accordance with the circumstances. The nature of the stopper 31 for the guiding motion may be selected by a skilled person, too, in accordance with the purpose thereof, and no restriction is imposed on such a stopper 31. For example, the stopper 31 may be an elastic part (e. g. made of rubber or any other suitable elastic polymer) or may be a spring (e. g. made of a metal or metal alloy).

In another preferred embodiment of the invention realized alone or together with several or all other embodiments of the invention, which advantageously allows a good temperature management of the molten fluid or molten polymer material fed by the melt feed line 1 including the first and second portions 10, 20, the first and/or second portions 10, 20 are surrounded by a thermal insulation means 32 suitable for preventing that the temperature of the molten fluid or molten polymer material flowing along the melt line including the first and at least one second portions is decreased to much due to loss of heat to the walls of the melt line 1 and/or of the first an at least one second portions 10, 20 and, via those walls, to the environment. Those thermal insulation means 32 may be made of any material suitable to provide a proper thermal insulation; a person skilled in the field of thermally insulating melt feed lines and their parts will be able to select such materials on the basis of the requirements of the specific apparatus and the temperature requirements, and in general, such materials will be material having a low coefficient of thermal conductance. The thermal insulation means 32 according to the present invention are preferably mounted to the first and/or at least one second portions 10, 20 of the melt line in such a way that they may be moved and/or expanded and contracted (together with the relative gliding motion of the first and at least one second portions 10, 20) and/or dismantled in any case of failure and need of repair or maintenance.

In another preferred embodiment realized alone or in combination with one or several or all other embodiments of the invention described herein, the melt feed line 1 including the first and at least one second portions 10, 20 comprises at least one, more preferably several temperature sensors 34, 34', .... The number of temperature sensors is not restricted (particularly not restricted by the present Figure 3), and also the positioning of these temperature sensor(s) 34, 34', ..., is not restricted. Their number and position along the melt feed line 1 including the first and at least one second portions 10, 20 may be freely selected by a skilled person in accordance with the requirements. Preferably, at least two and even more preferably three temperature sensors 34, 34', 34" are included into the melt feed line 1 of the invention, and a position thereof at the outlet parts 14, 24 of each of the first and second portions 10, 20 are preferred.

It goes without saying that the temperature sensor(s) 34, 34', ..., are connected to a temperature management (and/or monitoring) system (not shown in the Figures, but as such and in its suitable embodiments well known to a skilled person so that a detailed description thereof may be omitted). In cases that the temperature sensors signal to the temperature monitoring and management system that the temperature of the molten fluid (specifically the molten polymer material) is falling below a critical value, the system may actuate at least one heating element 33 preferably also included into the melt feed line 1 (including the first and at least one second portions 10, 20) and located along the first and at least one second portions 10, 20 at suitable positions. The number and position of the heating elements 33, 33', 33" is not particularly restricted; also in this case, a skilled person may select the number and position of the heating elements 33, 33', 33", ... in accordance with the needs. In even more preferred embodiments of the invention, the number of heating elements 33 is at least two and, much more preferred, is at least three, and their position is selected to be at or close to the first portion 10 (particularly close to the inlet 13 of the first portion 10) of the melt feed line 1 and close to the area of gliding of the first portion 10 relative to the second portion 20, since such additional area may need an additional heating of the melt feed line. The nature of the heating element 33 may be selected by a skilled person, too, in accordance with the purpose thereof, and no restriction is imposed on such a heating element 33. For example, a heating jacket, an electrical heating element, an ultrasonic heating element or any other suitable heating element 33 may be used.

In accordance with the invention, the melt feed line 1 including the first and at least one second portions 10, 20 may be employed not only between a mixer or extruder as the first fixed position device 2 of the overall plant and an orifice or die as the second fixed position device 3. In accordance with the invention, the melt feed line 1 of the invention may also be employed at other locations in the overall plant, where any device expanding with increasing (and contracting with decreasing) temperatures is preferably fixed at a certain position and the expansion (or contraction) is compensated by the telescoping (i. e. contracting or expanding) melt feed line 1 of the invention including the first and at least one second portions 10, 20. Examples of such devices connected by the melt feed line 1 of the invention (not restricting the invention) are a melt filter, a melt feed pump (sometimes used for achieving a highly constant feed of the molten polymer material from the extruder to the die(s)) and dies. Melt feed lines 1 of the invention may be used to connect only a part of these devices fixed in their position within the overall plant or may be used to connect all of these devices of the overall plant. According to the invention, it is preferred that at least the majority of the devices, if not all of them, are connected by the melt feed line 1 including the first and at least one second portions 10, 20 of the invention.

The invention also relates to a process for supplying a molten fluid as, for example, a polymer melt material from a first fixed position device 2 to another fixed position device 3.

The term "fixed position device" as used in the present specification and claims refers to a device the position of which is fixed relatively in an operating environment, e. g. in the environment of a larger plant, for example due to the fact that the proper function of the device within the overall plant depends upon its fixed relative position. An example of the "fixed position device" is a die releasing a polymer film onto a chilling roller: The proper chilling process on the roller (or on a combination of rollers, which may include a nip between an upper and a lower roller) depends upon the appropriate distance between the die and the roller(s), and any change of the distance may result into an increase of the risk of a failure to proceed the polymer film from the die to the roller(s). Hence, it is essential that such distance between the die and the roller(s) does not change in the course of the high-speed process step of releasing the polymer film from the die to the roller(s). Hence, even if position changes occur due to a temperature increase of one or several devices of the overall plant, distance changes due to an expansion or contraction of devices should be compensated by other means, e. g. by expandable or contractable (telescope-like) feed lines (as those of the invention) and not by position changes of one or several of the devices. Instead, the devices should be in a fixed relative position.

The term "polymer material web", as used in the present specification and claims, is defined to broadly relate to a flat piece of a material which has a sufficient size to be processed in a calandering device or in a stretching device, to name only two examples. It is, of course, possible that the polymer material web is wound on a core without further processing. Particularly, the length of said flat piece (e. g. sheet, film, etc.) of material is long enough to be fed into the stretching device, processed therein and taken up after processing by suitable means, e. g. take-up rollers, and the width of said flat piece of material is large enough to be grasped by clip systems commonly used for the orientation step. Exemplary, but not restricting examples of such a material web are webs made of polymer films and having the length and width needed for processing in a stretching device. In the present invention, polymer films are the preferred material webs and may have a width of between 0.1 and 5 meters (m), preferably between 0.5 and 2 m.

The term "polymer film web", as used in the present specification and claims, is used in a similar manner as the term "polymer material web" defined above. As will be acknowledged by a person skilled in the art, the polymer film web will define webs having a relatively low thickness. This may be exemplified by polymer films, which are prepared, in process steps known per se and conducted before a usual (stretching) processing, by processes exemplified by (but not restricted to) extrusion, blowing, casting, rolling or calendering or similar film forming techniques in a thickness of between 1 µm and 10,000 µm, preferably in a thickness of between 100 µm and 2,500 µm. Such films, due to their low thickness, already have a certain transparency to visible light and a number of further desired properties, as, for example, strength, porosity, permeability or impermeability (e. g. for gases) etc., which might be changed by the stretching step of the invention.

In preferred embodiments of the present invention, the first fixed position device 2 is a device for mixing polymers, e. g. homopolymers or copolymers or mixtures thereof ("blends") alone or in combination with suitable additives or charges. Such steps of mixing may include the application of mechanical forces (e. g. shear forces) onto the mixture (either including additional agents and/or charges or not), which mechanical treatment may include the increase of the temperature of the resulting mixture due to the shear forces applied. The mixing may also include the increase of the temperature by the separate application of heat energy to the mixture via a contact of the mixture (or components thereof) with heating means, e. g. heated walls of the mixing device, heating jackets, electrical or inductive heating, heating by irradiating IR radiation, heating by microwave treatment, etc..

In preferred embodiments of the invention, the first fixed position device 2 is an extruder which may comprise a single screw or a double screw, the latter case including screws rotating in the same direction (con-rotating screws) or moving in different directions (counter-rotating screws). Even more preferably, the extruder is positioned upstream of the first portion 10 of the melt feed line 1.

Alternatively or together with the above-mentioned first fixed position device 2, preferred embodiments of the invention also comprise an orifice as the second fixed position device 3, which is adapted to release the molten polymer, preferably in the form of a polymer film web. In even more preferred embodiments of the invention, the orifice is an extrusion die, which is positioned downstream of the second portion 20 of the melt line 1, in particularly preferred embodiments for releasing a polymer film web to be chilled on chilling rollers located further downstream of the orifice/extruder die.

In accordance with the present invention, the process for supplying a polymer material from one fixed position device 2 to another fixed position device 3 comprises the following steps:
(i) A raw polymer material is supplied to the first fixed position device 2, where the polymer material is treated in a predetermined manner and heated to a predetermined temperature by usual heating means so as to obtain a molten treated polymer material. In preferred embodiments of the invention, said raw polymer material may be selected from those polymer materials mentioned above in detail. There may be used one single polymer material (homopolymer or copolymer), or there may be used several polymer materials (homopolymers or copolymers or both) as polymer material blends. As also mentioned above, further additives and/or charges may be added to the raw polymer material before, while or after entering said polymer material into the first fixed position device. In those preferred cases of the invention where the first fixed position device 2 is a mixer for the polymer material, the polymer material(s), optionally together with additive(s) and/or charge(s), are mixed in the mixer so as to obtain a homogeneous mixture. More preferably, the first fixed position device 2 is an extruder (single screw or twin screw, in the latter case with co-rotating or counter-rotating screws). In such an extruder, the polymer materials are not only mixed, but also heated to an elevated temperature. Such heat may result not only from the application of heat supplied by heating means, but may also result from the application of shear forces to the material under mixture. The temperature to which the polymer material treated in the extruder is brought depends upon the quality and molecular weight of the polymer material and usually is in a range of from 100 °C to 450 °C, more preferably in the range of from 130 °C to 380 °C. The result is a molten treated (e. g. homogeneously mixed and heated) polymer material in a condition suitable for the next process step.
(ii) At the outlet of the first fixed position device 2, the treated polymer material is released into the melt feed line 1, for being guided to the second fixed position device 3.
(iii) The released, treated polymer material is allowed to pass the melt feed line 1; the previous step (ii) as well as this step (iii) are further explained below.
(iv) The treated polymer material having passed the melt feed line 1 is entered into the second fixed position device 3 for further treatment; said second fixed position device 3 may be an orifice, for example an orifice of a die such as an extruder die, and the further treatment may, for example, be the generation of a polymer film web for a later stretching said polymer film web in order to provide it with specified properties.
(v) When entering the melt feed line 1, the polymer material is entered into a first portion 10 of said melt line 1. The first portion 10 has an outer peripheral wall 11 creating a diameter (i. e. a distance between the two outer sides of the wall 11) of D'. The inner peripheral wall 12 surrounds a free volume of the melt feed line 1 having a diameter of D". The diameters D' and D" satisfy the relationship D' > D". The diameters D' and D" are measured in a plane perpendicular to the axis A of the melt feed line 1, said axis A extending substantially in the middle of the melt feed line 1 (including its first and second portions 10, 20 in parallel to the flow of the molten fluid or polymer material melt, when fed from one of the devices 2, 3 to the other one.

The free volume of the melt feed line 1 surrounded by the inner peripheral wall 12 may have any cross-section, for example may have circular, square, rectangular or triangular cross-section, without restricting the invention. A circular cross-section, although not exclusively realized, is preferred. In other words: In a preferred embodiment of the invention, the melt feed line 1 preferably has a circular cross-section both inside and outside.

The first portion 10 of the melt feed line 1 extends from an inlet 13 along the melt feed line axis A to an outlet 14. The inlet 13 is either connected to an upstream portion U of the melt feed line 1, or the inlet 13 is connected to a device E located upstream of the first portion 10 of the melt feed line 1.

The wall of the first portion 10 of the melt feed line 1 consisting of the inner peripheral wall 12 and the outer peripheral wall 11 may have any shape and thickness which may be selected by a skilled person in accordance with the technical requirements. In preferred embodiments of the invention, the wall thickness may be in a range of from 0.5 mm to 10 mm, preferably in a range of from 1 mm to 7 mm.

From the first portion 10 of the melt feed line 1, the polymer materials are guided, in accordance with the invention, to at least one second portion 20 of the melt feed line 1. The at least one second portion 20 has an inner peripheral wall 22 having a diameter (i. e. a distance between the two inner sides of the wall 22) D' corresponding to the diameter D' of the outer peripheral wall 11 of the first portion 10, and an outer peripheral wall 21 having a diameter D. The diameters D and D' satisfy the relationship D > D'. The diameters D and D' are measured in a plane perpendicular to the axis A of the melt feed line 1, said axis extending substantially in the middle of the melt feed line 1 (including its second portion 20) in parallel to the flow of the molten fluid or polymer material melt.

The at least one second portion 20 (or several second portions 20, 20', 20", ..., which are arranged in sequence along the axis A of the melt feed line 1) extends/extend from an inlet 23 along the melt feed line axis A to an outlet 24. The outlet 24 is connected to a downstream portion W of the melt feed line 1.Alternatively, the outlet 24 may be connected to a device F located downstream of the second portion 20 of the melt feed line 1.

In a further preferred embodiment of the invention, the inner peripheral wall 12 of the first portion 10 of the melt feed line 1 diverges towards the outer peripheral wall 11 in the direction from the inlet side 13 of the first portion 10 towards the outlet side 14 thereof. The inner diameter D" of the first portion 10 is continuously increased by the divergence of the inner peripheral wall 12 towards the outer peripheral wall 11 so as to approximate to the inner diameter D' of the inner peripheral wall 22 of the at least one second portion 20.

In accordance with the invention, it is preferred that the molten polymer material is entered into, and allowed to pass, one second portion 20 of the melt feed line 1 only before entering the second fixed position device 3. In such a case, the two portions 10, 20 of the melt feed line 1 are sufficient to compensate the expansion (at increasing temperature) or contraction (at decreasing temperature) of the devices 2, 3 due to temperature changes resulting from the treatment of the polymer material(s).

In accordance with the invention, the outlet 14 of the first portion 10 is allowed to glide, with its outer peripheral wall 11, in parallel to the melt feed line axis a along the inner peripheral wall 22 of the second portion 20 adjoining its inlet 23. Such a gliding motion may be a motion of the end of the outlet 14 downstream (i. e. towards the second fixed position device 3) in cases of increasing temperature, i. e. when the device parts expand due to their thermal expansion coefficient at increasing temperature, or alternatively may be a motion of the end of the outlet 14 upstream (i. e. towards the first fixed position device 2) in cases of decreasing temperature, i.e. when the device parts contract due to their thermal coefficient at decreasing temperature.

The distance of the movement is determined by the thermal expansion or contraction of said two fixed position devices 2, 3 in the course of their increase or decrease of dimensions due to their contact with the molten fluid or polymer material. Hence, the distance may be, in preferred embodiments of the invention, a small distance in cases of slight temperature changes and may be a larger distance, if the temperature change is large. In particularly preferred cases, the overall distance of movement may be in the range of from 5 mm to 200 mm, more preferably in the range of from 10 mm to 50 mm, and a skilled person may select the proper distance of gliding movement on the basis of ordinary skill.

In a further preferred embodiment of the invention, the process comprises the step that the molten polymer material is maintained at, or brought to, a predetermined temperature when contacting the walls of the first and the at least one second portions 10, 20. Such temperature increase is effected in preferred embodiments of the invention by suitable heating means which are provided in the walls of the first and second portions 10, 20 of the melt feed line 1, as for exampie heating jackets, heating lamps, inductive (electric) heating means, microwave heating means etc..

The invention also relates to a plant for manufacturing a processed polymer material.

Such polymer processing plants comprising a feed inlet for the raw polymer material allowing the raw polymer material to be supplied, optionally the same or a different feed inlet allowing the supply of at least one further additive and/or charge, a device for mixing the raw polymer material, optionally together with one or more additive(s) and/or one or more charge(s) while heating it to become a molten polymer material, one or more device(s) for further processing the resulting molten polymer material said mixing and further processing devices being connected by at least one melt feed line, are widely known to a person skilled in the field of polymer material processing. One of the main disadvantages in these plants known from the prior art was the problem addressed above, i. e. that the devices of the overall plant, which were usually made of metals or metal alloys, when contacted with the hot polymer melt, were subjected a certain expansion of the metal (alloy) at increasing temperatures and to a certain contraction of the metal (alloy) at decreasing temperatures. As a result, the transfer of the molten polymer material without leaking and tensions of the apparatus could be performed only with devices which could move relative to each other as a result of the thermal expansion or contraction. However, the melt lines available up to now could not compensate such expansion or contraction movements, resulting into interferences with the molten polymer material transport.

These problems of such plants could be overcome by using the melt feed lines of the present invention. As a result, the melt feed line 1 of the invention comprising a first portion 10 and at least one second portion 20 and including the features and preferred features explained above in connection to the melt feed line 1 has the capability of compensating the thermal expansion of devices connected by the melt feed line 1 at increasing temperatures and/or the thermal contraction of such devices at decreasing temperatures during operation thereof. In contrast to the prior art, no complicated arrangements of the devices subjected to temperature changes are necessary, and the melt of polymer materials is transferred between different fixed position devices without that the exact location of one device in relation to another device has to be changed.

The advantages of the present invention can be realized for all polymer material manufacturing and processing plants where the (in contrast to the technical status of the prior art) the different devices of the plant are in a fixed position despite the fact that these devices are subject to thermal expansion and contraction with increasing or decreasing temperatures of the devices of the plant. The melt feed line 1 of the present invention including the first portion 10 and at least one second portion 20 may easily contract (when the fixed position devices expand at increasing temperatures) or may easily expand (when the fixed position devices contract at decreasing temperatures). This is due to the "telescoping" function of the first and at least one second portions 10, 20 of the melt feed line 1, which portions easily glide in relation to each other, thereby changing their overall length considerably and allowing to compensate the dimension changes of the devices.

In one preferred embodiment, the device for further processing the molten polymer material is a die for extruding the polymer melt passed through it.

In another preferred embodiment of the invention, the device for further processing the molten polymer material is a mold into which the polymer material is filled in order to allow the polymer material to take a specific desired shape determined by the inner space of the mold.

Even more preferred are plants of the present invention, wherein the device for further processing the resulting molten polymer material is a die for extruding the polymer melt passed through it in the form of a polymer material film. Such film may be further processed in many different ways, two of which are exemplarily mentioned: The resulting polymer film may be released by the die to pass onto one roller or onto/between a system of several rollers for calandering. Another example is a process of stretching the polymer film released from the die and chilled on a chilling roll (located immediately downstream of the die) either monoaxially (i. e. in one direction, which may be the machine direction or the transverse direction) or biaxially for improving one or several of its properties.

The major advantage of the melt feed line 1 of the invention comprising a first portion 10 and at least one second portion 20, and its main impact on the industrial applicability, is its capability of compensating the thermal expansion of devices connected by the melt feed line 1 at increasing temperatures and/or the thermal contraction of such devices at decreasing temperatures during operation thereof. In contrast to the prior art, no complicated arrangements of the devices subjected to temperature changes are necessary, and the melt of polymer materials is transferred between different fixed position devices without that the exact location of one device in relation to another device has to be changed.

## Claims

1. A melt feed line (1) capable of connecting, and supplying a molten fluid between, two fixed position devices (2, 3), said melt feed line (1) comprising
- a first portion (10) having an outer peripheral wall (11) having a diameter (D') and an inner peripheral wall (12) surrounding a free volume of the melt feed line (1) having a diameter (D"), with (D') > (D"), said first portion (10) extending from an inlet (13) along the melt feed line axis (A) to an outlet (14), said inlet (13) being connected to an upstream portion (U) of the melt feed line (1) or a device (E) located upstream of the first portion (10); and
- at least one second portion (20, 20') having an inner peripheral wall (22) having a diameter (D') corresponding to the diameter (D') of the outer peripheral wall (11) of the first portion (10) and an outer peripheral wall (21) having a diameter (D), with (D) > (D'), said at least one second portion (20) extending from an inlet (23) along the melt feed line axis (A) to an outlet (24), said outlet being connected to a downstream portion (W) of the melt feed line (1) or a device (F) located downstream of the second portion (20);
- the outlet (14) of the first portion (10) being capable, with its outer peripheral wall (11), of gliding, in parallel to the melt feed line axis (A), along the inner peripheral wall (22) of the second portion (20) adjoining its inlet (23), by a distance determined by the thermal expansion or contraction of said two fixed position devices (2, 3) in the course of their increase or decrease of dimensions due to a contact with the molten fluid.

2. The melt feed line (1) according to claim 1, wherein the inner peripheral wall (12) of the first portion (10) of the melt feed line (1) diverges towards the outer peripheral wall (11) in the direction towards the outlet (14) thereof, thereby increasing the inner diameter (D") of the first portion so as to approximate it to the inner diameter (D') of the inner peripheral wall (22) of the at least one second portion (20).

3. The melt feed line (1) according to claim 1 or claim 2, wherein heating means (15, 25) for maintaining the molten fluid at, or bringing the molten fluid to, a predetermined temperature are provided in the walls of the first and at least one second portions (10, 20).

4. The melt feed line (1) according to any of the claims 1 to 3, wherein the first and/or the at least one second portions (10, 20) additionally comprise at least one of, preferably a combination of, at least one guiding element (30) for the gliding motion, at least one stopper (31) for the gliding motion, at least one thermal insulation (32), at least one heating element (33) and at least one temperature sensor (34).

5. The melt feed line (1) according to any of the claims 1 to 4, wherein one of the two fixed position devices (2, 3) is a mixing device for the molten fluid, preferably is an extruder positioned upstream of the first portion (10) of the melt feed line (1), and/or wherein the other one of the two fixed position devices (2, 3) is an orifice releasing the molten fluid, preferably is an extrusion die positioned downstream of the second portion (20) of the melt feed line (1).

6. The melt feed line (1) according to any of the claims 1 to 5, wherein the molten fluid is a polymer material melt, preferably is a polymer material melt for stretching a polymer film web.

7. The melt feed line (1) according to any of the claims 1 to 6, comprising one first portion (10) and one second portion (20).

8. A process for supplying a polymer material from one fixed position device (2) to another fixed position device (3), said process comprising the steps of
(i) supplying a raw polymer material to a first fixed position device (2) where the raw polymer material is treated in a predetermined manner and heated to a predetermined temperature by usual heating means so as to obtain a molten treated polymer material;
(ii) releasing the treated polymer material at the outlet of the first fixed position device (2) into a melt feed line (1);
(iii) allowing the treated polymer material to pass said melt feed line (1); and
(iv) guiding the polymer material from the melt feed line (1) to a second fixed position device (3) for further treatment; wherein
(v) said polymer material, at the outlet of the first fixed position device (2), is entered into a first portion (10) of said melt feed line (1), said first portion having an outer peripheral wall (11) having a diameter (D') and an inner peripheral wall (12) surrounding a free volume of the melt feed line (1) having a diameter (D"), with (D') > (D"), said first portion (10) extending from an inlet (13) along the melt feed line axis (A) to an outlet (14), said inlet (13) being connected to an upstream portion (U) of the melt feed line (1) or to the first fixed position device (2) located upstream of the first portion (10), from where
(vi) said polymer material, after passing the outlet (14) of the first portion (10) of the melt feed line (1), is entered into at least one second portion (20) of the melt feed line (1), said second portion (20) having an inner peripheral wall (22) having a diameter (D') corresponding to the diameter (D') of the outer peripheral wall (11) of the first portion (10) and an outer peripheral wall (21) having a diameter (D), with (D) > (D'), said at least one second portion (20) extending from an inlet (23) along the melt feed line axis (A) to an outlet (24), said outlet being connected to a downstream portion (W) of the melt feed line (1) or the second fixed position device (3) located downstream of the second portion (20); while
(vii) allowing the outlet (14) of the first portion (10) to glide, with its outer peripheral wall (11), in parallel to the melt feed line axis (A) along the inner peripheral wall (22) of the second portion (20) adjoining its inlet (23), by a distance determined by the thermal expansion or contraction of said two fixed position devices (2, 3) in the course of their increase or decrease of dimensions due to a contact with the molten fluid.

9. The process according to claim 8, wherein the first fixed position device (2) is a mixing device for the molten polymer, preferably is an extruder positioned upstream of the first portion (10) of the melt feed line (1), and/or wherein the second fixed position device (3) is an orifice releasing the molten polymer, preferably is an extrusion die positioned downstream of the second portion (20) of the melt feed line (1).

10. The process according to claim 8 or claim 9, wherein the molten polymer material is maintained at, or brought to, a predetermined temperature when contacting the walls of the first and at least one second portions (10, 20), preferably by suitable heating means.

11. The process according to any of claims 8 to 10, wherein the molten polymer material is entered into, and allowed to pass, one second portion (20) of the melt feed line (1) only, before entering the second fixed position device (3).

12. A plant for manufacturing a processed polymer material from a raw polymer material comprising
(a) a feed inlet for the raw polymer material allowing the raw polymer material to be supplied;
(b) optionally the same or a different feed inlet allowing the supply of at least one further additive and/or charge;
(c) a device for mixing the raw polymer material, optionally together with one or more additives and/or one or more charge(s) while heating it to become a homogeneous molten polymer material;
(d) one or more device(s) for further processing the resulting molten polymer material;
(e) said means (c) to (d) being connected by at least one melt feed line;
(f) said melt feed line being a melt feed line (1) according to any of the claims 1 to 7.

13. The plant according to claim 12, wherein the device for further processing the resulting polymer material is a die for extruding the polymer melt passed through it.

14. The plant according to claim 12 or claim 13, wherein the device for further processing the resulting polymer material is a die for extruding the polymer melt passed through it in the form of a film, followed by one or more calandering roller(s).

15. The plant according to any of the claims 12 to 14, wherein the device for further processing the resulting polymer material is a die for extruding the polymer melt passed through it in the form of a film, followed by a stretching plant for monoaxially or biaxially stretching the polymer film obtained.

16. The plant according to claim 12, wherein the device for further processing the resulting polymer material is a mold.

## Patentansprüche

1. Schmelze-Zufuhrleitung (1), befähigt, zwei Vorrichtungen (2, 3) mit fixierter Position zu verbinden und ein geschmolzenes Fluid zwischen den beiden Vorrichtungen zuzuleiten, wobei die Schmelze-Zufuhrleitung (1) umfasst:
- einen ersten Teil (10), der eine Außenumfangswand (11) mit einem Durchmesser (D') und eine Innenumfangswand (12) aufweist, die ein freies Volumen der Schmelze-Zufuhrleitung (1) umgibt und einen Durchmesser (D") aufweist, wobei (D') > (D") ist, wobei sich der erste Teil (10) von einem Einlass (13) entlang der Achse (A) der Schmelze-Zufuhrleitung zu einem Auslass (14) erstreckt und wobei der Einlass (13) mit einem stromaufwärts liegenden Teil (U) der Schmelze-Zufuhrleitung (1) oder einer Vorrichtung (E) verbunden ist, die stromaufwärts des ersten Teils (10) angeordnet ist; und
- wenigstens einen zweiten Teil (20, 20'), der eine Innenumfangswand (22) mit einem Durchmesser (D') aufweist, der den Durchmesser (D') der Außenumfangswand (11) des ersten Teils (10) entspricht, und eine Außenumfangswand (21) mit einem Durchmesser (D) aufweist, wobei (D) > (D') ist, wobei der wenigstens eine zweite Teil (20) sich von einem Einlass (23) entlang der Achse (A) der Schmelze-Zufuhrleitung zu einem Auslass (24) erstreckt, wobei der Auslass mit einem stromabwärts liegenden Teil (W) der Schmelze-Zufuhrleitung (1) oder einer Vorrichtung (F) verbunden ist, die stromabwärts des zweiten Teils (20) angeordnet ist;
- wobei der Auslass (14) des ersten Teils (10) befähigt ist, mit seiner Außenumfangswand (11) parallel zu der Achse (A) der Schmelze-Zufuhrleitung entlang der Innenumfangswand (22) des zweiten Teils (20), die dessen Einlass (23) benachbart ist, um eine Entfernung zu gleiten, die durch die thermische Expansion oder Kontraktion der beiden Vorrichtungen (2, 3) mit fixierter Position im Verlauf von deren Dimensions-Erhöhung oder -Erniedrigung aufgrund eines Kontakts mit dem geschmolzenen Fluid bestimmt ist.

2. Schmelze-Zufuhrleitung (1) nach Anspruch 1, worin die Innenumfangswand (12) des ersten Teils (10) der Schmelze-Zufuhrleitung (1) zu der Außenumfangswand (11) hin in Richtung auf deren Auslass (14) auseinander läuft und sich **dadurch** der Innendurchmesser (D") des ersten Teils vergrößert und sich so an den Innendurchmesser (D') der Innenumfangswand (22) des wenigstens einen zweiten Teils (20) annähert.

3. Schmelze-Zufuhrleitung (1) nach Anspruch 1 oder Anspruch 2, worin HeizEinrichtungen (15, 25) zum Halten des geschmolzenen Fluids bei einer vorbestimmten Temperatur oder zum Bringen des geschmolzenen Fluids auf eine vorbestimmte Temperatur in den Wänden des ersten Teils und des wenigstens einen zweiten Teils (10, 20) vorgesehen sind.

4. Schmelze-Zufuhrleitung (1) nach irgendeinem der Ansprüche 1 bis 3, worin der erste und/oder der wenigstens eine zweite Abschnitt (10, 20) zusätzlich wenigstens eines der folgenden Elementen, vorzugsweise eine Kombination aus den folgenden Elemente umfassen: wenigstens ein Führungselement (30) für die Gleitbewegung, wenigstens einen Stopper (31) für die Gleitbewegung, wenigstens eine thermische Isolation (32), wenigstens ein Heiz-Element (33) und wenigstens einen Temperatursensor (34).

5. Schmelze-Zufuhrleitung (1) nach irgendeinem der Ansprüche 1 bis 4, worin eine der beiden Vorrichtungen (2, 3) mit fixierter Position eine Misch-Vorrichtung für das geschmolzene Fluid ist, vorzugsweise ein Extruder ist, der stromaufwärts des ersten Teils (10) der Schmelze-Zufuhrleitung (1) angeordnet ist, und/oder worin die andere der beiden Vorrichtung (2, 3) mit fixierter Position eine Öffnung ist, die das geschmolzene Fluid auslässt, vorzugsweise eine Extrusionsdüse ist, die stromabwärts des zweiten Teils (20) der Schmelze-Zufuhrleitung (1) angeordnet ist.

6. Schmelze-Zufuhrleitung (1) nach irgendeinem der Ansprüche 1 bis 5, worin das geschmolzene Fluid eine Polymermaterial-Schmelze ist, vorzugsweise eine Polymermaterial-Schmelze zum Recken einer Polymer-Folie ist.

7. Schmelze-Zufuhrleitung (1) nach irgendeinem der Ansprüche 1 bis 6, umfassend einen ersten Teil (10) und einen zweiten Teil (20).

8. Verfahren zum Zuleiten eines Polymermaterials von einer Vorrichtung (2) mit fixierter Position zu einer anderen Vorrichtung (3) mit fixierter Position, wobei das Verfahren die Schritte umfasst:
(i) Zuleiten eines Roh-Polymermaterials zu einer ersten Vorrichtung (2) mit fixierter Position, wo das Roh-Polymermaterial in einer vorbestimmten Weise behandelt und auf eine vorbestimmte Temperatur durch übliche Heizeinrichtungen erhitzt wird und man so ein geschmolzenes behandeltes Polymermaterial erhält.
(ii) Freisetzen des behandelten Polymermaterials am Auslass der ersten Vorrichtung (2) mit fixierter Position in eine Schmelze-Zufuhrleitung (1).
(iii) Ermöglichen, dass das behandelte Polymermaterial durch die Schmelze-Zufuhrleitung (1) hindurch tritt; und
(iv) Leiten des Polymermaterials von der Schmelze-Zufuhrleitung (1) zu einer zweiten Vorrichtung (3) mit fixierter Position zur weiteren Behandlung; worin
(v) das Polymermaterial am Auslass der ersten Vorrichtung (2) mit fixierter Position in einen ersten Teil (10) der Schmelze-Zufuhrleitung (1) eingeleitet wird, wobei der erste Teil eine Außenumfangswand (11) mit einem Durchmesser (D') und eine Innenumfangswand (12), die ein freies Volumen der Schmelze-Zufuhrleitung (1) umgibt und einen Durchmesser (D") aufweist, wobei (D') > (D") ist, wobei sich der erste Teil (10) von einem Einlass (13) entlang der Achse (A) der Schmelze-Zufuhrleitung zu einem Auslass (14) erstreckt, wobei der Einlass (13) mit einem stromaufwärts gelegenen Teil (U) der Schmelze-Zufuhrleitung (1) oder der ersten Vorrichtung (2) mit fixierter Position, die stromaufwärts des ersten Teils (10) angeordnet ist, verbunden ist, von wo
(vi) das Polymermaterial nach Passieren des Auslasses (14) des ersten Teils (10) der Schmelze-Zufuhrleitung (1) in wenigstens einen zweiten Teil (20) der Schmelze-Zufuhrleitung (1) eingeleitet wird, wobei der zweite Teil (20) eine Innenumfangswand (22) aufweist, die einen Durchmesser (D') aufweist, der den Durchmesser (D') der Außenumfangswand (11) des ersten Teils (10) entspricht, und eine Außenumfangswand (21) aufweist, die einen Durchmesser (D) hat, wobei (D) > (D') ist, wobei sich der wenigstens eine zweite Teil (20) von einem Einlass (23) entlang der Achse (A) der Schmelze-Zufuhrleitung zu einem Auslass (24) erstreckt, wobei der Auslass mit einem stromabwärts liegenden Teil (W) der Schmelze-Zufuhrleitung (1) oder der zweiten Vorrichtung (3) mit fixierter Position, die stromabwärts des zweiten Teils (20) angeordnet ist, verbunden ist; während man
(vii) zulässt, dass der Auslass (14) des ersten Teils (10) mit seiner Außenumfangswand (11) parallel zur Achse (A) der Schmelze-Zufuhrleitung entlang der Innenumfangswand (22) des zweiten Teils (20) in Nachbarschaft zu seinem Einlass (23) um eine Distanz gleitet, die durch die thermische Ausdehnung oder Kontraktion der beiden Vorrichtungen (2, 3) mit fixierter Position im Verlauf von deren Dimensions-Erhöhung oder -Erniedrigung aufgrund eines Kontakts mit dem geschmolzenen Fluid bestimmt wird.

9. Verfahren nach Anspruch 8, worin die erste Vorrichtung (2) mit fixierter Position eine Misch-Vorrichtung für das geschmolzene Polymer ist, vorzugsweise ein Extruder ist, der stromaufwärts des ersten Teils (10) der Schmelze-Zufuhrleitung (1) angeordnet ist, und/oder worin die zweite Vorrichtung (3) mit fixierter Position eine Öffnung ist, die das geschmolzene Polymer freisetzt, vorzugsweise eine Extrusionsdüse ist, die stromabwärts des zweiten Teils (20) der Schmelze-Zufuhrleitung (1) angeordnet ist.

10. Verfahren nach Anspruch 8 oder Anspruch 9, worin das geschmolzene Polymermaterial bei einer vorbestimmten Temperatur gehalten oder auf eine vorbestimmte Temperatur gebracht wird, wenn es die Wände des ersten und des wenigstens einen zweiten Teils (10, 20) berührt, vorzugsweise durch geeignete Heizeinrichtungen.

11. Verfahren nach irgendeinem der Ansprüche 8 bis 10, worin das geschmolzene Polymermaterial nur im einen zweiten Teil (20) der Schmelze-Zufuhrleitung (1) eingeleitet und dazu gebracht wird, durch diesen hindurch zu treten, bevor es in die zweite Vorrichtung (3) mit fixierter Position eintritt.

12. Anlage zur Herstellung eines verarbeiteten Polymermaterials aus einem Roh-Polymermaterial, umfassend
a) einen Zufuhrmaterial-Einlass für das Roh-Polymermaterial, der es ermöglicht, dass das Roh-Polymermaterial zugeleitet wird;
b) gegebenenfalls denselben oder einen davon verschiedenen Zufuhrmaterial-Einlass, der das Zuleiten wenigstens eines weiteren Additivs und/oder Zuschlagsstoffs ermöglicht;
c) eine Vorrichtung zum Mischen des Roh-Polymermaterials, gegebenenfalls zusammen mit einem oder mehreren Additiv(en) und/oder einem oder mehreren Zuschlagsstoff(en), während man dieses in der Weise erhitzt, dass es ein homogenes geschmolzenes Polymermaterial wird;
d) eine oder mehrere Vorrichtung(en) zum weiteren Verarbeiten des resultierenden geschmolzenen Polymermaterials;
e) wobei die Einrichtungen c) bis d) durch wenigstens eine Schmelze-Zufuhrleitung verbunden sind;
f) wobei die Schmelze-Zufuhrleitung eine Schmelze-Zufuhrleitung (1) gemäß irgendeinem der Ansprüche 1 bis 7 ist.

13. Anlage gemäß Anspruch 12, worin die Vorrichtung zum weiteren Verarbeiten des resultierenden Polymermaterials eine Düse zum Extrudieren der Polymer-Schmelze ist, die durch diese hindurch geleitet wird.

14. Anlage gemäß Anspruch 12 oder Anspruch 13, worin die Vorrichtung zum weiteren Verarbeiten des resultierenden Polymermaterials eine Düse zum Extrudieren der Polymer-Schmelze, die durch diese hindurchgeleitet wird, in Form eines Films ist, gefolgt von einer oder mehreren Kalander-Walze(n).

15. Anlage nach irgendeinem der Ansprüche 12 bis 14, worin die Vorrichtung zum weiteren Verarbeiten des resultierenden Polymermaterials eine Düse zum Extrudieren der Polymer-Schmelze, die durch diese hindurchgeleitet wird, in Form eines Films ist, gefolgt von einer Reck-Anlage zum monoaxialen oder biaxialen Recken des erhaltenen Polymer-Films.

16. Anlagen nach Anspruch 12, worin die Vorrichtung zum weiteren Verarbeiten des resultierenden Polymermaterials eine Form ist.

## Revendications

1. Conduite d'alimentation de masse fondue (1) capable de raccorder deux dispositifs en position fixe (2, 3) et d'acheminer un fluide en fusion entre les deux, ladite conduite d'alimentation de masse fondue (1) comprenant :
- une première portion (10) possédant une paroi périphérique externe (11) possédant un diamètre (D') et une paroi périphérique interne (12) entourant un volume libre de la conduite d'alimentation de masse fondue (1), possédant un diamètre (D"), (D') étant supérieur à (D"), ladite première portion (10) s'étendant depuis une entrée (13) le long de l'axe de la conduite d'alimentation de masse fondue (A) jusqu'à une sortie (14), ladite entrée (13) étant reliée à une portion en amont (U) de la conduite d'alimentation de masse fondue (1) ou à un dispositif (E) disposé en amont de la première portion (10) ; et
- au moins une deuxième portion (20, 20') possédant une paroi périphérique interne (22) possédant un diamètre (D') correspondant au diamètre (D') de la paroi périphérique externe (11) de la première portion (10) et une paroi périphérique externe (21) possédant un diamètre (D), (D) étant supérieur à (D'), ladite au moins une deuxième portion (20) s'étendant depuis une entrée (23) le long de l'axe de la conduite d'alimentation de masse fondue (A) jusqu'à une sortie (24), ladite sortie étant reliée à une portion en aval (W) de la conduite d'alimentation de masse fondue (1) ou à un dispositif (F) disposé en aval de la deuxième portion (20) ;
- la sortie (14) de la première portion (10) étant capable, avec sa paroi périphérique externe (11), de glisser parallèlement à l'axe de la conduite d'alimentation de masse fondue (A) le long de la paroi périphérique interne (22) de la deuxième portion (20) adjacente à son entrée (23), sur une distance déterminée par la contraction ou la dilatation thermique desdits deux dispositifs en position fixe (2, 3) au cours de l'augmentation ou de la diminution de leurs dimensions, due au contact avec le fluide en fusion.

2. Conduite d'alimentation de masse fondue (1) selon la revendication 1, dans laquelle la paroi périphérique interne (12) de la première portion (10) de la conduite d'alimentation de masse fondue (1) diverge en direction de la paroi périphérique externe (11), dans la direction de sa sortie (14), pour ainsi augmenter le diamètre interne (D") de la première portion de telle sorte qu'il s'approche du diamètre interne (D') de la paroi périphérique interne (22) de ladite au moins une deuxième portion (20).

3. Conduite d'alimentation de masse fondue (1) selon la revendication 1 ou 2, dans laquelle on prévoit des moyens de chauffage (15, 25) pour maintenir le fluide en fusion à une température prédéterminée ou bien pour amener le fluide en fusion à ladite température, dans les parois de la première portion et de ladite au moins une deuxième portion (10, 20).

4. Conduite d'alimentation de masse fondue (1) selon l'une quelconque des revendications 1 à 3, dans laquelle la première portion et/ou ladite au moins une deuxième portion (10, 20) comprennent en outre au moins un élément parmi au moins un élément de guidage (30) pour le mouvement de glissement, au moins un dispositif d'arrêt (31) pour le mouvement de glissement, au moins une isolation thermique (32), au moins un élément de chauffage (33) et au moins un capteur de température (34)., de préférence leur combinaison.

5. Conduite d'alimentation de masse fondue (1) selon l'une quelconque des revendications 1 à 4, dans laquelle un des deux dispositifs en position fixe (2, 3) est un dispositif de mélange pour le fluide en fusion, de préférence représente une extrudeuse disposée en amont de la première portion (10) de la conduite d'alimentation de masse fondue (1), et/ou dans laquelle l'autre dispositif parmi les deux dispositifs en position fixe (2, 3) est un orifice libérant le fluide en fusion, de préférence représente une filière d'extrusion disposée en aval de la deuxième portion (20) de la conduite d'alimentation de masse fondue (1).

6. Conduite d'alimentation de masse fondue (1) selon l'une quelconque des revendications 1 à 5, dans laquelle le fluide en fusion est une masse fondue à base d'une matière polymère, de préférence une masse fondue à base d'une matière polymère pour l'étirage d'une bande de film polymère.

7. Conduite d'alimentation de masse fondue (1) selon l'une quelconque des revendications 1 à 6, comprenant une première portion (10) et une deuxième portion (20).

8. Procédé pour acheminer une matière polymère depuis un dispositif en position fixe (2) jusqu'à un autre dispositif en position fixe (3), ledit procédé comprenant les étapes :
(i) d'acheminement d'une matière polymère brute à un premier dispositif en position fixe (2) dans lequel la matière polymère brute est traitée d'une manière prédéterminée et est chauffée à une température prédéterminée via des moyens de chauffage habituels, de façon à obtenir une matière polymère traitée en fusion ;
(ii) de libération de la matière polymère traitée à la sortie du premier dispositif en position fixe (2) dans une conduite d'alimentation de masse fondue (1) ;
(iii) de passage de la matière polymère traitée par ladite conduite d'alimentation de masse fondue (1) ; et
(iv) de guidage de la matière polymère depuis la ligne d'alimentation de masse fondue (1) jusqu'à un deuxième dispositif en position fixe (3) à des fins de traitement ultérieur ; dans lequel
(v) ladite matière polymère, à la sortie du premier dispositif en position fixe (2), pénètre dans une première portion (10) de ladite conduite d'alimentation de masse fondue (1), ladite première portion possédant une paroi périphérique externe (11) possédant un diamètre (D') et une paroi périphérique interne (12) entourant un volume libre de la conduite d'alimentation de masse fondue (1), possédant un diamètre (D"), (D') étant supérieur à (D"), ladite première portion (10) s'étendant depuis une entrée (13) le long de l'axe de la conduite d'alimentation de masse fondue (A) jusqu'à une sortie (14), ladite entrée (13) étant reliée à une portion en amont (U) de la conduite d'alimentation de masse fondue (1) ou au premier dispositif en position fixe (2) disposé en amont de la première portion (10) ; de là
(vi) ladite matière polymère, après son passage par la sortie (14) de la première portion (10) de la conduite d'alimentation de masse fondue (1), pénètre dans au moins une deuxième portion (20) de la conduite d'alimentation de masse fondue (1), ladite deuxième portion (20) possédant une paroi périphérique interne (22) possédant un diamètre (D') correspondant au diamètre (D') de la paroi périphérique externe (11) de la première portion (10) et une paroi périphérique externe (21) possédant un diamètre (D), (D) étant supérieur à (D'), ladite au moins une deuxième portion (20) s'étendant depuis une entrée (23) le long de l'axe de la conduite d'alimentation de masse fondue (A) jusqu'à une sortie (24), ladite sortie étant reliée à une portion en aval (W) de la conduite d'alimentation de masse fondue (1) ou au deuxième dispositif en position fixe (3) disposé en aval de la deuxième portion (20) ; tandis que
(vii) la sortie (14) de la première portion (10) glisse, avec sa paroi périphérique externe (11), parallèlement à l'axe de la conduite d'alimentation de masse fondue (A) le long de la paroi périphérique interne (22) de la deuxième portion (20) adjacente à son entrée (23), sur une distance déterminée par la contraction ou la dilatation thermique desdits deux dispositifs en position fixe (2, 3) au cours de l'augmentation ou de la diminution de leurs dimensions, due au contact avec le fluide en fusion.

9. Procédé selon la revendication 8, dans lequel le premier dispositif en position fixe (2) est un dispositif de mélange pour le polymère en fusion, de préférence représente une extrudeuse disposée en amont de la première portion (10) de la conduite d'alimentation de masse fondue (1), et/ou dans lequel le deuxième dispositif en position fixe (3) est un orifice libérant le polymère en fusion, de préférence représente une filière d'extrusion disposée en aval de la deuxième portion (20) de la conduite d'alimentation de masse fondue (1).

10. Procédé selon la revendication 8 ou 9, dans lequel la matière polymère en fusion est maintenue ou bien est amenée à une température prédéterminée lors de la mise en contact avec les parois de la première portion et de ladite au moins une deuxième portion (10, 20), de préférence via des moyens de chauffage appropriés.

11. Procédé selon l'une quelconque des revendications 8 à 10, dans lequel on fait pénétrer la matière polymère en fusion et on la fait passer uniquement dans une deuxième portion (20) de la conduite d'alimentation de masse fondue (1), avant de la faire entrer dans le deuxième dispositif en position fixe (3).

12. Installation pour la préparation d'une matière polymère traitée à partir d'une matière polymère brute, comprenant :
(a) une entrée d'alimentation pour la matière polymère brute permettant d'acheminer la matière polymère brute ;
(b) de manière facultative, la même entrée d'alimentation ou une entrée d'alimentation différente permettant l'alimentation d'au moins un additif supplémentaire et/ou une matière de charge supplémentaire ;
(c) un dispositif pour mélanger la matière polymère brute, de manière facultative conjointement avec un ou plusieurs additifs et/ou avec une ou plusieurs matières de charge, tout en la chauffant pour obtenir une matière polymère homogène en fusion ;
(d) un ou plusieurs dispositifs pour le traitement ultérieur de la matière polymère en fusion résultante ;
(e) lesdits moyens (c) à (d) étant reliés par au moins une conduite d'alimentation de masse fondue ;
(f) ladite conduite d'alimentation de masse fondue étant une conduite d'alimentation de masse fondue (1) selon l'une quelconque des revendications 1 à 7.

13. Installation selon la revendication 12, dans laquelle le dispositif pour le traitement ultérieur de la matière polymère résultante est une filière pour extruder la masse fondue polymère qui la traverse.

14. Installation selon la revendication 12 ou 13, dans laquelle le dispositif pour le traitement ultérieur de la matière polymère résultante est une filière pour extruder la masse fondue polymère qui la traverse, sous la forme d'un film, suivie par un ou plusieurs cylindres de calandrage.

15. Installation selon l'une quelconque des revendications 12 à 14, dans laquelle le dispositif pour le traitement ultérieur de la matière polymère résultante est une filière pour extruder la masse fondue polymère qui la traverse, sous la forme d'un film, suivie d'une installation d'étirage pour l'étirage monoaxe ou biaxe du film polymère obtenu.

16. Installation selon la revendication 12, dans laquelle le dispositif pour le traitement ultérieur de la matière polymère résultante est un moule.
